# EUROPEAN PATENT APPLICATION

(11) **EP 4 471 735 A1**
(43) Date of publication of application: **04.12.2024**
(21) Application number: 23177000.9
(22) Date of filing: 02.06.2023
(51) Int. Cl.: G06V 20/56, G08G 1/00, G06V 40/10

(54) **METHOD FOR DETECTING A NEED OF ASSISTANCE OF A FIRST ROAD USER, DATA PROCSSING APPARATUS, COMPUTER PROGRAM, COMPUTER-READABLE STORAGE MEDIUM, AND USE**

(71) Applicant: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(57) **Abstract**

The disclosure relates to a method for detecting a need of assistance of a first road user (16). The method comprises receiving first image data (I1) comprising a representation of the first road user (16). Moreover, the method comprises determining whether the first road user (16) is involved in an accident based on the first image data (I1). The method also comprises receiving second image data (I2) comprising a representation of a second road user (18) and determining whether the second road user (18) is departing based on the received second image data (I2). It is inferred that the first road user (16) needs assistance if the first road user (16) is determined to be involved in an accident and if the second road user (18) is determined to be departing. Moreover, a data processing apparatus (24), a computer program (32), and a computer-readable storage medium (30) are shown. Also a use of the first road user characteristic (C1) is described.

## Description

### TECHNICAL FIELD

The present disclosure relates to a method for detecting a need of assistance of a first road user.

Moreover, the present disclosure relates to a data processing apparatus, a computer program, and a computer-readable storage medium.

Furthermore, the present disclosure is directed to a use of a first road user characteristic.

### BACKGROUND

Using a road, i.e. moving within a traffic system, involves certain risks for each road user or traffic participant, for example the risk to be involved in an accident.

For this reasons, a multiplicity of measures to avoid accidents is known. This enhances road safety. However, despite these measures, accidents could not be completely eliminated. Thus, as a further aspect of enhanced road safety, appropriate assistance needs to be provided to the road users involved in an accident.

### SUMMARY

It is an objective of the present disclosure to facilitate the provision of assistance to a road user involved in an accident.

The problem is at least partially solved or alleviated by the subject matter of the independent claims of the present disclosure, wherein further examples are incorporated in the dependent claims.

According to a first aspect, there is provided a method for detecting a need of assistance of a first road user. The first road user is located in a surrounding of a second road user. The method comprises:
- receiving first image data comprising a representation of the first road user,
- determining whether the first road user is involved in an accident based on the first image data,
- receiving second image data comprising a representation of a second road user,
- determining whether the second road user is departing from the first road user based on the received second image data,
- inferring that the first road user needs assistance if the first road user is determined to be involved in an accident and if the second road user is determined to be departing.

In this context, image data may relate to optical image data, infrared image data, lidar data, radar data or any combination thereof. Such image data may be provided by known types of sensors which are frequently used in vehicles, especially the vehicles comprising at least one driver assistance system or vehicles being able to drive fully or partially autonomously. Based on such image data, the determination whether the first road user is involved in an accident may be performed quickly and precisely. Also a position and/or a traveling direction of the second road user may be determined precisely and quickly based on the second image data. In case it is determined that the second road user is departing and, at the same time, the first road users involved in an accident, it is inferred that the second road user is not available for providing assistance to the first road user. Consequently, the first road user is in need of assistance. In a case in which the second road user is found not to be departing, the second road user stays in the surroundings of the first road user and, thus, is available for providing assistance to the first road user. In this case, no further need of assistance of the first road user exists. Altogether, using the present method, a need of assistance of the first road user may be determined quickly and reliably.

Based on the method according to the first aspect of the present disclosure, assistance may be provided to the first road user in a quick and reliable manner. The assistance may be provided by the second road user or any other road user or entity. To this end, the method optionally comprises providing a notification. The notification comprises an information that the first road user needs assistance. In a case in which a location of the first road user and/or the entity performing the method is known, also an information indicative of this location may be provided. In an example, the notification is provided in the form of a message provided, e.g. sent, to a safety authority, e.g. an ambulance service or a hospital. In another example, the notification is provided in the form of a trigger signal for a notification means of the entity executing the method. If the entity executing the method is a vehicle, the trigger signal may be configured to cause the vehicle to honk and/or activate warning lights. In another example, the notification is provided in the form of a message provided, e.g. sent, to an emergency contact.

According to an example, the first road user is a pedestrian, a biker or a rider of a scooter. More generally speaking, the first road user may be a vulnerable road user.

In an example in which the first road user is a pedestrian, the method may further comprises determining whether the pedestrian is located on a driving lane of the road. If so, the method may be continued. If not, the method may be abandoned or, optionally, a moving direction of the pedestrian may be determined. In case the moving direction is oriented towards a driving lane of the road, the method may be continued. Otherwise, the method may be abandoned since in this case it is highly improbable that the pedestrian is located on a driving lane sometime soon.

It is noted that in the context of the present method, also the second road user may be involved in an accident. The first road user and the second road user may be involved in the same accident, i.e. the first road user and the second road user may have an accident.

It is further noted that the present method may be used in the context of a hit-and-run accident. In this case, both the first road user and the second road user are involved in the same accident. However, the second road user departs and, thus, is not available for providing assistance to the first road user.

In an example, the method according to the present disclosure is executed by a third road user separate from the first road user and the second road user. Alternatively, the present method is executed by a means remote from the third road user, but from the perspective of the third road user. In this case, the means may comprise a cloud computing entity. The third road user may be a vehicle, especially a vehicle comprising at least one driver assistance system or a vehicle being able to drive fully or partially autonomously.

In an example, the method further comprises determining or receiving a first road user characteristic based on the received first image data. Determining whether the first road user is involved in an accident is based on the determined first road user characteristic and/or based on a change of the determined first road user characteristic. Thus, the determination whether the first road user is involved in an accident may be performed with high precision and reliability.

In an example, the first road user characteristic is indicative of one or more of a road user body pose, a road user travelling speed or a road user height. Additionally or alternatively, a change of the first road user characteristic is indicative of one or more of a change of a road user body pose, a change of a road user travelling speed or a change of a road user height. Based on such a road user characteristic or a change thereof, one may reliably determine whether the first road user is involved in an accident. In an example in which the first road user characteristic is indicative of a road user body pose, an accident may be determined by determining that the body pose is different from body poses used for standard traveling. In an example in which the first road user characteristic is indicative of a road user traveling speed, an abrupt acceleration followed by an abrupt deceleration may be an indication of an accident. In another example in which the first road user characteristic is indicative of a road user traveling speed, a comparatively high and therefore unusual traveling speed may be an indication of an accident. In an example in which the first road user characteristic is indicative of the road user height, an abrupt reduction of the road user height may be an indication of an accident. In an example in which the road user is a pedestrian, the road user height may for example be reduced from a height of the road user while standing or walking to a height associated with kneeing or lying. In another example in which the first road user characteristic is indicative of the road user height, a very small road user height may be an indication of an accident. Altogether, an involvement of the first road user in an accident may be determined reliably.

According to an example, the method further comprises applying a human pose estimation algorithm on the received first image data. Consequently, a road user pose may be determined with high precision.

According to an example, the first road user characteristic is indicative of the road user body pose, the road user travelling speed and the road user height. Additionally or alternatively, the change of the first road user characteristic is indicative of the change of the road user body pose, the change of the road user travelling speed and the change of a road user height. In other words, the first road user characteristic is indicative of a combination of the road user body pose, the road user traveling speed and the road user height. Based thereon, and involvement of the first road user in an accident may be determined with particularly high precision.

In an example, determining whether the first road user is involved in an accident based on the determined first road user characteristic and/or based on a change of the determined first road user characteristic comprises
- receiving a historic road user characteristic, and
- comparing the determined road user characteristic to the historic road user characteristic.

In this context, a historic road user characteristic is a road user characteristic dating from a past time. Such a historic road user characteristic may be available on a storage means, e.g. a database. It is noted that the historic road user characteristic does not necessarily need to be linked to the first road user. This means that the historic road user characteristic does not necessarily need to have been detected on or in connection with the first road user. The determined road user characteristic is compared to the historic road user characteristic. In a first alternative, the historic road user characteristic relates to an accident situation. Thus, if comparing the determined road user characteristic to the historic road user characteristic results in finding that the determined road user characteristic is similar to the historic road user characteristic, one may infer that the first road user is involved in an accident. Otherwise, if comparing the determined road user characteristic to the historic road user characteristic results in finding that the determined road user characteristic is different from the historic road user characteristic, one may infer that the first road user is not involved in an accident. In a second alternative, the historic road user characteristic relates to a non-accident situation. Consequently, if the determined road user characteristic is found to be similar to the historic road user characteristic, it is inferred that the first road user is not involved in an accident. Otherwise, if the determined road user characteristic is found to be different from the historic road user characteristic, it is inferred that the first road user is involved in an accident. Altogether, it may be reliably determined whether the first road user is involved in an accident or not.

According to an example, the storage means, e.g. the database, on which the historic road user characteristic is provided, is installed on a third road user, e.g. a vehicle. Alternatively, the storage means, e.g. the database, is installed remote from the third road user, e.g. on a server acting as a cloud storage. In either case, the historic road user characteristic is easily available.

According to an example, the road user characteristic is indicative of a road user body pose. The historic road user characteristic may be indicative of a historic road user body pose. Thus, in this example, the historic road user body pose may be provided on a storage means, e.g. a database. Other than that, the same variants, effects and advantages that have already been mentioned in connection with the general description of a historic road user characteristic also apply to the historic road user body pose.

In an example, the historic road user characteristic, e.g. the historic road user body pose, may result from a real accident. In other words, the historic road user characteristic, e.g. the historic road user body pose may be a documentation of a real accident. This further enhances the reliability of the historic road user characteristic, e.g. the historic road user body pose, and the comparison performed therewith.

In an example, the method further comprises determining a location of the first road user based on the received first image data. To this end, known techniques for determining a location based on image data may be used. Based thereon, a determination that the first road user needs assistance may be enhanced by the determined location of the first road user. This facilitates providing appropriate assistance.

In an example, the method further comprises providing one or more of the first image data, the first road user characteristic, the change of the first road user characteristic, the determination result that the first road user is involved in an accident, the second image data, the determination result that the second road user is departing or the inference that the first road user needs assistance to a safety authority. An example of the safety authority is the police or a medical service provider such as a hospital or an ambulance service. Consequently, the safety authority can provide appropriate assistance.

According to an example, the method further comprises determining one or more of an identification feature of the second road user, a second road user characteristic of the second road user or a driving characteristic of the second road user based on the received second image data. An example of an identification feature is a license plate number. An example of a second road user characteristic is one or more of a car make, model or color. An example of a driving characteristic is a driving speed or and/or a driving direction. Based thereon, a reliability of the determination whether the second road user is departing is increased. Furthermore, based thereon, it is possible to find the second road user. This may be helpful for in order to clarify details of the accident in which the first road user has been involved.

According to an example, the method further comprises tracking the second road user based on the received second image data. This has the effect that finding the second road user is further facilitated. Consequently, the second road user can help clarifying the accident situation in which the first road user has been involved.

In an example, the method further comprises determining an injury status indicative of a severity of an injury of the first road user based on the received first image data and/or based on the second image data. The injury status may enhance the interference of a need for assistance. This is due to the fact that, based on the injury status, a type of assistance may be determined in addition to the simple fact that assistance is needed. Based thereon, highly appropriate assistance may be provided to the first road user.

In an example, determining an injury status comprises determining the first road user characteristic even after the determination that the first road user is involved in an accident. Based on the first road user characteristic or a change thereof, the injury status may be determined in a precise and reliable manner. In an example, determining the first road user characteristic involves determining whether the first road user is moving or not.

In another example, a determined traveling speed of the second road user is used in determining an injury status of the first road user. In a case in which the determined traveling speed equals or exceeds a predefined speed threshold, a severe injury may be estimated. Otherwise, only a light injury may be estimated.

According to a further example, also the injury status is provided to the safety authority. This helps the safety authority to provide appropriate assistance.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the present disclosure. Thus, using such a data processing apparatus, a need of assistance of the first road user may be determined quickly and reliably. This determination allows to provide assistance in a quick and reliable manner. The assistance may be provided by the second road user or any other road user or entity.

According to a third aspect, there is provided a computer program comprising instructions which, when the computer program is executed by a computer, cause the computer to carry out the method of the present disclosure. Thus, using such a computer program, a need of assistance of the first road user may be determined quickly and reliably. This determination allows to provide assistance in a quick and reliable manner. The assistance may be provided by the second road user or any other road user or entity.

According to a fourth aspect, there is provided a computer-readable storage medium comprising instructions which, when executed by a computer, cause the computer to carry out the method of the present disclosure. Thus, using such a computer-readable storage medium, a need of assistance of the first road user may be determined quickly and reliably. This determination allows to provide assistance in a quick and reliable manner. The assistance may be provided by the second road user or any other road user or entity.

According to a fifth aspect, there is provided a use of a first road user characteristic indicative of a road user body pose for determining whether the first road user is involved in an accident. Thus, using first road user characteristic indicative of a road user body pose for determining whether the road user is involved in an accident, provides a reliable basis for determining a need of assistance of the first road user. This determination allows to provide assistance in a quick and reliable manner.

In an example, the use further comprises using a historic road user characteristic indicative of a historic road user body pose for determining whether road user is involved in an accident. Consequently, the determination whether the road user is involved in an accident is further enhanced.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a traffic situation comprising a first road user, a second road user and a third road user, wherein the third road user comprises a data processing apparatus according to the present disclosure, a computer-readable storage medium according to the present disclosure, and a computer program according to the present disclosure, wherein a method for detecting a need of assistance of the first road user may be executed by the third road user,
- Figure 2: shows the traffic situation of Figure 1 at a later point in time,
- Figure 3: shows examples of body poses of the first road user and examples of historic body poses, and
- Figure 4: shows examples of sequences of body poses of the first road user.

The Figures are merely schematic representations and serve only to illustrate examples of the disclosure. Identical or equivalent elements are in principle provided with the same reference signs.

### DETAILED DESCRIPTION

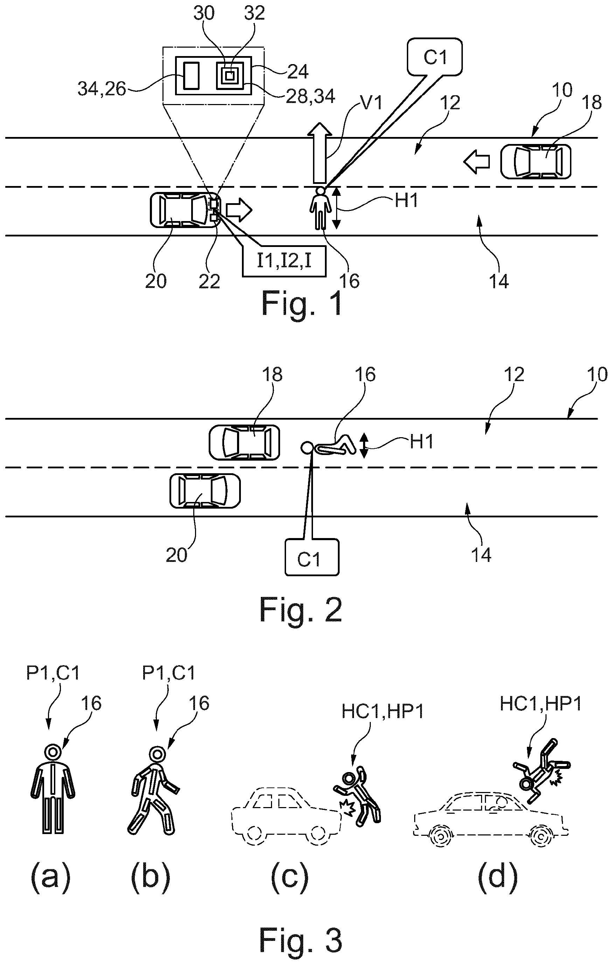

Figures 1 and 2 show a traffic situation at two different points in time.

The traffic situation comprises a road 10 with two lanes 12, 14.

Moreover, the traffic situation comprises a first road user 16 being a pedestrian.

The traffic situation also comprises a second road user 18 being a vehicle. The second road user 18 travels along a traveling direction indicated by an arrow along lane 12.

The second road user 18 is located in the surroundings of the first road user 16.

Furthermore, the traffic situation comprises a third road user 20 being a vehicle. The third road user 20 travels along a traveling direction indicated by an arrow along lane 14.

The third road user 20, i.e. the vehicle, is configured to drive at least partially autonomously.

Therefore, the third road user 20 comprises a camera unit 22. Moreover, the third road user 20 comprises a data processing apparatus 24. The camera unit 22 is communicatively connected to the data processing apparatus 24 such that image data generated by the camera unit 22 can be communicated to the data processing apparatus 24.

The data processing apparatus 24 comprises a data processing unit 26 and a data storage unit 28.

The data storage unit 28 comprises a computer-readable storage medium 30 on which there is provided a computer program 32.

The computer program 32 and, thus, the computer-readable storage medium 30 comprise instructions which, when executed by the data processing unit 26 or, more generally speaking, a computer, cause the data processing unit 26 or the computer to carry out a method for detecting a need of assistance of the first road user 16.

Consequently, the data processing unit 26 and the data storage unit 28 form means 34 for carrying out the method for detecting a need of assistance of the first road user 16.

In the following, the method for detecting the need of assistance of the first road user 16 will be explained with reference to Figures 1 and 2.

The method is executed on the third road user 20 using the data processing apparatus 24.

In a first step S 1, first image data I1 is received at the data processing apparatus 24. The first image data I1 is provided by the camera unit 22. The first image data I1 comprise a representation of the first road user 16.

Moreover, in a second step S2, second image data I2 is received at the data processing apparatus 24. Also the second image data I2 is provided by the camera unit 22. The second image data I2 comprises a representation of the second road user 18.

It is noted that providing both the first image data I1 and the second image data I2 by the same camera unit 22 is just an example. It is of course also possible to receive the first image data I1 from a first camera unit and the second image data I2 from a second camera unit of the third road user 20.

It is further noted that the first image data I1 and the second image data I2 may be formed as combined image data I comprising both a representation of the first road user 16 and the second road user 18. In this case, the combined image data I is provided by a single camera unit.

It is additionally noted that the first image data I1, the second image data I2 and/or the combined image data I may be provided by different camera units of the third road user 20 at different points in time.

Thereafter, in an optional third step S3, a location of the first road user 16 may be determined based on the first image data I1.

Based on the determined location of the first road user 16, an evaluation may be performed whether the first road user 16 is located on one of the lanes 12, 14 or if the first road user 16 intends to cross the road 10. In the latter alternative, a moving direction of the first road user 16 may be determined based on locations determined for different points in time.

In a case in which the first road user 16 is found not to be located on one of the lanes 12, 14 and not to intend to cross the road 10, the method may be abandoned. Otherwise, the method may be continued.

Thereafter, in a fourth step S4, a first road user characteristic C1 is determined based on the received first image data I1.

In the present example, the first road user characteristic C1 is indicative of a body pose P1 of the first road user 16. In this context, Figure 3A shows the first road user having a body pose P1 associated with standing. Figure 3B shows the first road user 16 having a body pose P1 associated with walking.

The body pose P1 may be determined by applying a body pose estimation algorithms on the first image data I1. Such body pose estimation algorithms are known as such.

Subsequently, in a fifth step S5, it is determined whether the first road user 16 is involved in an accident. This is done based on the determined first road user characteristic C1. Thus, in the present example, the determination is based on the body pose P1 of the first road user 16.

In addition to the determined body pose P1 of the first road user 16, a historic road user characteristic HC1, which in the present example also relates to a body pose is received.

In the present example, for the ease of explanation a number of historic road user characteristics HC1 are provided on the data storage unit 28. However, it is also possible to provide the historic road user characteristics HC1 by a storage unit or database located remote from the third road user 20.

In the present example, the historic road user characteristics HC1 relate to historic body poses HP1 that have been determined in accident situations. Figures 3C and 3D illustrates two examples of historic body poses HP1 that have been determined in accident situations.

Thus, when comparing a determined body pose P1 of the first road user 16 and the historic body poses HP1, a similarity between the determined body pose P1 and the historic body pose HP1 may be found. In such a case, it is inferred that the first road user 16 is involved in an accident. In simplified words, if it is found that the first road user 16 assumes a body pose which is similar the a historic body pose HP1 that has been assumed in accidents from a past time, it is inferred that the first road user 16 is involved in an accident.

It is understood that additionally or alternatively, the first road user characteristic C1 may relate to a road user travelling speed V1 and/or a road user height H1. Based thereon, an involvement in an accident may be inferred if the user travelling speed V1 suddenly increases and/or if the road user height H1 suddenly decreases.

It is noted that additionally or alternatively, a change of a body pose, change of a travelling speed and/or a change of road user height may be used as an indicator of an involvement in an accident.

Additionally, in a sixth step S6, is determined whether the second road user 18 is departing. This is done based on the received second image data I2. More precisely, a location of the second road user 18 may be determined at several points in time based on the second image data I2. Based thereon, one may determine whether the second road user 18 is moving and, if so, a direction of movement.

Additionally or alternatively, the second road user 18 may be tracked based on the received second image data I2.

Moreover, in an optional seventh step S7, one or more of an identification feature of the second road user 18, a second road user characteristic of the second road user 18 or a driving characteristic of the second road user 18 may be determined based on the received second image data I2. This is helpful for evaluating whether the second road user 18 is available for helping the first road user 16 who has been determined to be involved in an accident.

In a further optional eighth step, an injury status indicative of a severity of an injury of the first road user 16 may be determined based on the received first image data I1.

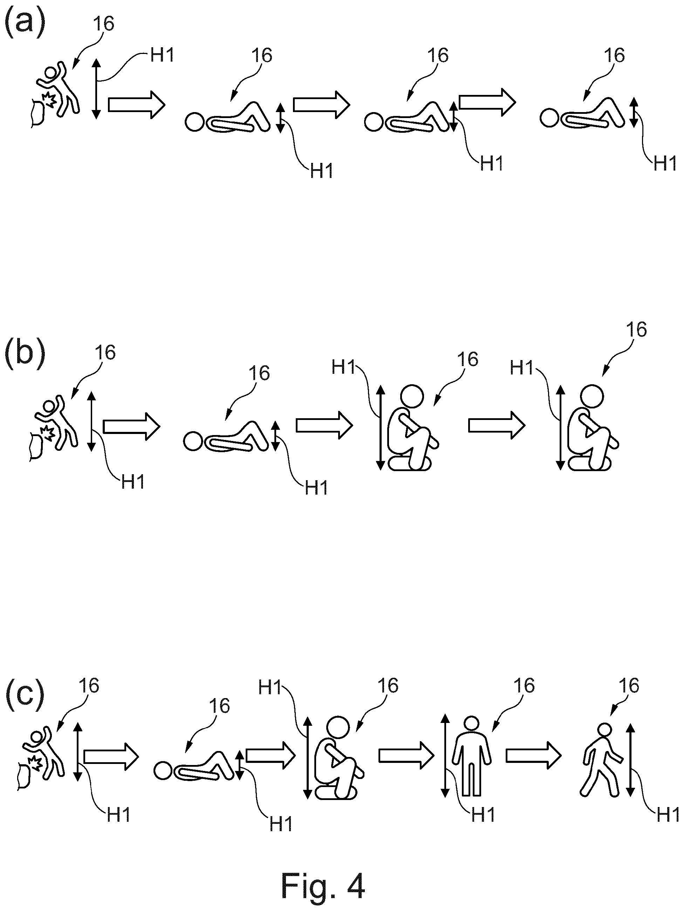

In the present example, the injury status is determined based on a sequence of body poses of the first road user 16. Figure 4 shows three example sequences.

In the example of Figure 4a, the body pose of the first road user 16 relates to lying. The body pose is determined based on the first image data I1 for three different points in time. In the example of Figure 4a, it8 is found that the road user 16 does not change his or her body pose. This is an indication of an injury status of high severity.

In the example of Figure 4B, the body pose of the first road user 16 evolves from lying to kneeing. However, the first road user 16 does not stand up. This is an indication of a injury status of medium severity.

In the example of Figure 4C, the body pose of the first road user 16 evolves from lying to kneeing, from kneeing to standing and from standing to walking. This is an indication of an injury status of light severity.

Subsequently, in a ninth step S9, it is inferred that the first road user 16 needs assistance, if the first road user 16 is determined to be involved in an accident and if the second road user 18 is determined to be departing. In such a case, the second road user 18 is not available for providing assistance to the first road user 16. In other words, other types of assistance are needed.

Based thereon, in a tenth step S10, one or more of the first image data I1, the determination result that the first road user 16 is involved in an accident or the inference that the first road user needs assistance is provided to a safety authority. The safety authority is for example a medical service provider.

Optionally, also the injury status may be provided to the safety authority.

Based thereon, the safety authority, in the present example the medical service provider, can provide assistance to the first road user 16.

It is noted that in the present example, the first road user 16 is a pedestrian. However, this is just an example. In other examples, the first road user can be any other type of a vulnerable road user such as a cyclist or a rider of a scooter.

Moreover, it is noted that in all of the above examples, a first road user characteristic C1 indicative of a road user body pose P1 of the first road user 16 is used for determining whether the first road user 16 is involved in an accident. Additionally, a historic road user characteristic HC1 indicative of a historic road user body pose HP1 is used for determining whether the first road user 16 is involved in an accident. Based thereon, the determination whether the first road user 16 is involved in an accident may be done in a precise and reliable manner.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

### LIST OF REFERENCE SIGNS

- 10: road
- 12: lane
- 14: lane
- 16: first road user
- 18: second road user
- 20: third road user
- 22: camera unit
- 24: data processing apparatus
- 26: data processing unit
- 28: data storage unit
- 30: computer-readable storage medium
- 32: computer program
- 34: means for carrying out a method for detecting a need of assistance

- C1: first road user characteristic
- H1: road user height of the first road user
- HC1: historic road user characteristic
- HP1: historic body pose
- I: combined image data
- I1: first image data
- I2: second image data
- P1: road user body pose of the first road user
- V1: road user travelling speed of the first road user

- S 1: first step
- S2: second step
- S3: third step
- S4: fourth step
- S5: fifth step
- S6: sixth step
- S7: seventh step
- S8: eighth step
- S9: ninth step
- S 10: tenth step

## Claims

1. A method for detecting a need of assistance of a first road user (16) located in a surrounding of a second road user (18), the method comprising
- receiving first image data (I1) comprising a representation of the first road user (16),
- determining whether the first road user (16) is involved in an accident based on the first image data (I1),
- receiving second image data (12) comprising a representation of a second road user (18),
- determining whether the second road user (18) is departing from the first road user (16) based on the received second image data (12),
- inferring that the first road user (16) needs assistance if the first road user (16) is determined to be involved in an accident and if the second road user (18) is determined to be departing.

2. The method of claim 1, further comprising determining or receiving a first road user characteristic (C1) based on the received first image data (I1), wherein determining whether the first road user is involved in an accident is based on the determined first road user characteristic (C1) and/or based on a change of the determined first road user characteristic (C1).

3. The method of claim 2, wherein the first road user characteristic (C1) is indicative of one or more of a road user body pose (P1), a road user travelling speed (V1) or a road user height (H1), and/or
wherein a change of the first road user characteristic (C1) is indicative of one or more of a change of a road user body pose (P1), a change of a road user travelling speed (V1) or a change of a road user height (H1).

4. The method of claim 2 or claim 3, wherein determining whether the first road user (16) is involved in an accident based on the determined first road user characteristic (C1) and/or based on a change of the determined first road user characteristic (C1) comprises
- receiving a historic road user characteristic (HC1), and
- comparing the determined road user characteristic (C1) to the historic road user characteristic (HC1).

5. The method of claim 4, wherein the road user characteristic (C1) is indicative of a road user body pose (P1) and wherein the historic road user characteristic (HC1) is indicative of a historic road user body pose (HP1).

6. The method of any of the preceding claims, further comprising determining a location of the first road user (16) based on the received first image data (I1).

7. The method of any of the preceding claims, further comprising providing one or more of the first image data (I1), the first road user characteristic (C1), the change of the first road user characteristic (C1), the determination result that the first road user (16) is involved in an accident, the second image data (I2), the determination result that the second road user (18) is departing and the inference that the first road user (16) needs assistance to a safety authority.

8. The method of any of the preceding claims, further comprising determining one or more of an identification feature of the second road user (18), a second road user characteristic of the second road user (18) or a driving characteristic of the second road user (18) based on the received second image data (I2).

9. The method of any of the preceding claims, further comprising tracking the second road user (18) based on the received second image data (I2).

10. The method of any of the preceding claims, further comprising determining an injury status indicative of a severity of an injury of the first road user (16) based on the received first image data (I1) and/or based on the second image data (I2).

11. A data processing apparatus (24) comprising means (34) for carrying out the method of any of the preceding claims.

12. A computer program (32) comprising instructions which, when the computer program (32) is executed by a computer, cause the computer to carry out the method of claims 1 to 10.

13. A computer-readable storage medium (30) comprising instructions which, when executed by a computer, cause the computer to carry out the method of claims 1 to 10.

14. A use of a first road user characteristic (C1) indicative of a road user body pose (P1) for determining whether the first road user (16) is involved in an accident.

15. The use of claim 14, further comprising using a historic road user characteristic (HC1) indicative of a historic road user body pose (HP1) for determining whether the first road user (16) is involved in an accident.

## Amended claims

### Amended claims in accordance with Rule 137(2) EPC.

1. A method for detecting a need of assistance of a first road user (16) located in a surrounding of a second road user (18), the method comprising
- receiving first image data (I1) comprising a representation of the first road user (16),
- determining whether the first road user (16) is involved in an accident based on the first image data (I1),
- receiving second image data (I2) comprising a representation of a second road user (18),
- determining whether the second road user (18) is departing from the first road user (16) based on the received second image data (I2),
- inferring that the first road user (16) needs assistance if the first road user (16) is determined to be involved in an accident and if the second road user (18) is determined to be departing.

2. The method of claim 1, further comprising determining or receiving a first road user characteristic (C1) based on the received first image data (I1), wherein determining whether the first road user is involved in an accident is based on the determined first road user characteristic (C1) and/or based on a change of the determined first road user characteristic (C1).

3. The method of claim 2, wherein the first road user characteristic (C1) is indicative of one or more of a road user body pose (P1), a road user travelling speed (V1) or a road user height (H1), and/or
wherein a change of the first road user characteristic (C1) is indicative of one or more of a change of a road user body pose (P1), a change of a road user travelling speed (V1) or a change of a road user height (H1).

4. The method of claim 2 or claim 3, wherein determining whether the first road user (16) is involved in an accident based on the determined first road user characteristic (C1) and/or based on a change of the determined first road user characteristic (C1) comprises
- receiving a historic road user characteristic (HC1), and
- comparing the determined road user characteristic (C1) to the historic road user characteristic (HC1).

5. The method of claim 4, wherein the road user characteristic (C1) is indicative of a road user body pose (P1) and wherein the historic road user characteristic (HC1) is indicative of a historic road user body pose (HP1).

6. The method of any of the preceding claims, further comprising determining a location of the first road user (16) based on the received first image data (I1).

7. The method of any of the preceding claims, further comprising providing one or more of the first image data (I1), the first road user characteristic (C1), the change of the first road user characteristic (C1), the determination result that the first road user (16) is involved in an accident, the second image data (I2), the determination result that the second road user (18) is departing and the inference that the first road user (16) needs assistance to a safety authority.

8. The method of any of the preceding claims, further comprising determining one or more of an identification feature of the second road user (18), a second road user characteristic of the second road user (18) or a driving characteristic of the second road user (18) based on the received second image data (I2).

9. The method of any of the preceding claims, further comprising tracking the second road user (18) based on the received second image data (I2).

10. The method of any of the preceding claims, further comprising determining an injury status indicative of a severity of an injury of the first road user (16) based on the received first image data (I1) and/or based on the second image data (I2).

11. A data processing apparatus (24) comprising means (34) for carrying out the method of any of the preceding claims.

12. A computer program (32) comprising instructions which, when the computer program (32) is executed by a computer, cause the computer to carry out the method of claims 1 to 10.

13. A computer-readable storage medium (30) comprising instructions which, when executed by a computer, cause the computer to carry out the method of claims 1 to 10.

14. A use of a first road user characteristic (C1) indicative of a road user body pose (P1) for determining, by a road user (20) or from the perspective of a road user (20) separate from the first road user (16), whether the first road user (16) is involved in an accident.

15. The use of claim 14, further comprising using a historic road user characteristic (HC1) indicative of a historic road user body pose (HP1) for determining whether the first road user (16) is involved in an accident.
